# EUROPÄISCHE PATENTANMELDUNG

(11) **EP 0 589 248 A2**
(43) Veröffentlichungstag der Anmeldung: **30.03.1994**
(21) Anmeldenummer: 93113962.0
(22) Anmeldetag: 31.08.1993
(51) Int. Cl.: H04M 3/22, H04M 3/30, H04M 3/28, H04Q 11/04

(54) **Verfahren und Anordnung zur Anzeige von Rufnummern an Fernmeldeendgeräten einer Fernmeldenebenstellenanlage**

(30) Priorität: 25.09.1992 DE 4232272
(71) Anmelder: SIEMENS AKTIENGESELLSCHAFT, D-80333 München (DE)
(72) Erfinder: Drobek, Erich, Ing. grad., D-82008 Unterhaching (DE)

(57) **Zusammenfassung**

Zur Prüfung des korrekten Einrichtens von Fernmeldeendgeräten einer Fernmeldenebenstellenanlage wird das Steuerungsprogramm in der Weise ausgestaltet, daß an dem durch seine Rufnummer bestimmten Endgerät der Name des diesem Endgerät zugeordneten Teilnehmers anzeigbar ist. Diese Anzeige wird durch Wahl eines Sonderzeichens an dem Endgerät bzw. durch einen betriebstechnischen Auftrag ausgelöst.

## Beschreibung

Es sind unterschiedliche Fernmeldenebenstellenanlagen bekannt, die neben der eigentlichen Vermittlungssteuerung auch zu einer Steuerung bzw. Realisierung zusätzlicher, über den eigentlichen Vermittlungsvorgang hinausgehender Steuervorgänge befähigt sind. Solche zusätzlichen Funktionen werden im allgemeinen als Leistungsmerkmale bezeichnet, wobei hierbei insbesondere für den Kommunikationsdienst "Sprache" eine große Zahl unterschiedlicher Leistungsmerkmale bekannt ist. Zu solchen Leistungsmerkmalen zählt beispielsweise die Darstellung von Bedienerhinweisen auf optischen Anzeigeeinrichtungen der Endgeräte.

Aus den Produktschriften der Fa. Siemens "HICOM 600 System Product Data", Bestell-Nr. A19100-K 3161-G430-01-7600 (Seite 20), und "ISDN in the Office", Special Issue of Telcom Report and Siemens Magazin COM, Seiten 56 bis 64 und 92 bis 103 ISBN 3-8009-3849-9 ist bereits eine rechnergesteuerte Fernmeldenebenstellenanlage bekannt, bei der eine optische Bedienerführung (visual prompts) vorgesehen ist. Mit Hilfe von Displayanzeigen werden Teilnehmern mit digitalen Endgeräten Hinweise als Bedienerführung gegeben. Beispielsweise werden bei der Wahl einer fremden internen Rufnummer auf dem Display des Endgeräts, an dem diese Rufnummer gewählt wird, die fremde interne Rufnummer sowie der Name des Teilnehmers angezeigt, der dieser Rufnummer zugeordnet ist. Sogenannte Negativquittungen werden engezeigt, wenn sich bei einem Verbindungsherstellungsversuch ergibt, daß die gewünschte Verbindung nicht herstellbar ist. Wird beispielsweise die eigene Rufnummer gewählt, so erfolgt neben der Anzeige der eigenen Rufnummer auch die Anzeige des Hinweises "NICHT MÖGLICH" bzw. "Not possible". Bei der vorbekannten Fernmeldenebenstellenanlage ist auch eine akustische Bedienerführung (voice prompts) vorgesehen.

Aus der von der Firma Siemens Aktiengesellschaft im Jahr 1992 herausgegebenen Leistungsmerkmalsbeschreibung "Hicom 300, Call Bridge ACL, Application Connectivity Link, Telefondatendienst TDD, Bestell-Nr. A 30951-A5200-X 107-3-18, Seiten 1-1, 1-2 ist ein Leistungsmerkmal Telefondatendienst (TDD) bekannt. Dieses Leistungsmerkmal ermöglicht einem hierzu berechtigten Teilnehmer, von einem digitalen Telefonapparat aus Daten an eine Datenverarbeitungsanlage zu übermitteln. Die Datenverarbeitungsanlage kann ihrerseits Daten an den Teilnehmer senden, die auf dem Display seines Telefonapparats ausgegeben werden.

Bei der Erstinbetriebnahme einer Fernmeldenebenstellenanlage ist den einzelnen Endgeräten jeweils eine bestimmte interne Rufnummer zuzuordnen. Dies erfolgt über betriebstechnische Aufträge, wobei jeweils einer bestimmten Anschlußlage (physikalische Adresse im System, Nummer eines Teilnehmeranschlußports) die jeweilige Rufnummer und gegebenenfalls auch der Name des jeweiligen Teilnehmers zuzuordnen ist. Die Verdrahtung der einzelnen Endgeräte mit der Zentrale erfolgt entsprechend der Zuordnung von Teilnehmern und Räumen, in denen das jeweilige Endgerät für den Teilnehmer bereitgestellt wird. Nach dieser Verdrahtung und der Durchführung des zuvor erwähnten betriebstechnischen Auftrages, mit dem die Einrichtung der Rufnummern erfolgt, ist für jedes einzelne Endgerät zu überprüfen, ob die raum- und teilnehmernamenabhängige Zuordnung richtig erfolgt ist. Dies erfolgt in der Weise, daß von einem anderen Endgerät die Rufnummer des zu prüfenden Endgeräts gewählt wird. Sodann wird an dem zu prüfenden Endgerät festgestellt, ob dort die gewünschte Rufnummer und der gewünschte Teilnehmer korrekt angezeigt wird. Ist dies der Fall, kann das zu prüfende Endgerät mit der ihm zugeordneten Rufnummer beschriftet werden. Dieses Verfahren erweist sich in mehrfacher Hinsicht als untauglich: Zunächst ist, wie bereits erwähnt, die Rufnummer des zu prüfenden Endgeräts an einem fremden Endgerät zu wählen. Die Prüfperson hat sich dann vom Ort dieses fremden Endgeräts zum Ort des zu prüfenden Endgeräts zu begeben. Nachdem die Anzeige an dem zu überprüfenden Gerät festgestellt ist, hat sich die Prüfperson an den Ort des fremden Endgeräts zurückzubegeben, um die aufgebaute Verbindung zu beenden (Auflegen des Handapparats). Ergibt sich während dieses Prüfvorganges die Notwendigkeit, eine weitere interne Verbindung aufzubauen, beispielsweise um einen Fehler der Anzeige an dem zu prüfenden Endgerät einer weiteren Prüfperson mitzuteilen, so kann diese Internverbindung von dem zu prüfenden Gerät aus nicht aufgebaut werden, da das zu prüfende Endgerät während der fehlerhaften Anzeige besetzt ist.

Der Erfindung liegt die Aufgabe zugrunde, ein Verfahren der eingangs genannten Art in der Weise auszugestalten, daß Prüfvorgänge im Zusammenhang mit der Anzeige interner Rufnummern erleichtert werden.

Die Lösung dieser Aufgabe erfolgt erfindungsgemäß mit den Merkmalen des Patentanspruchs 1. Als wesentlich für die Erfindung ist anzusehen, daß die zu überprüfende Anzeige interner Rufnummern unabhängig von anderen internen Endgeräten der Fernmeldenebenstellenanlage erfolgt. Das zu überprüfende Endgerät steht während der Prüfanzeige für die Herstellung interner Verbindungen zur Verfügung. Dabei wird nach einer vorteilhaften Ausführungsform der Erfindung die Prüfanzeige (Rufnummer und Name des dem Endgerät zugeordneten Teilnehmers) durch die Wahl eines Sonderzeichens an diesem Endgerät ausgelöst. Alternativ hierzu wird die Prüfanzeige durch einen betriebstechnischen Auftrag ausgelöst, wobei die gleichzeitige Prüfanzeige an mehreren bzw. allen Endgeräten der Anlage realisiert wird. Bei der Erstinbetriebnahme einer Anlage kommt insbesondere die letztgenannte Ausführungsform der Erfindung zur Anwendung, während bei dem Anschluß neuer Endgeräte oder auch bei der Änderung von Rufnummern und/oder zugehörigen Namen einer bereits in Betrieb genommenen Anlage die erstgenannte Ausführungsform der Erfindung zur Anwendung kommt.

Die akustische Bedienerführung, bei der die Rufnummer und der zugehörige Teilnehmername des zu prüfenden Endgeräts zugesprochen werden, ermöglicht die Anwendung des erfindungsgemäßen Verfahrens auch auf Endgeräte, die keine optische Anzeigeeinrichtung aufweisen.

Die Erfindung wird nun anhand der Figuren beschrieben. Es zeigen
- Fig. 1: eine erfindungsgemäße Fernmeldenebenstellenanlage, die das erfindungsgemäße Verfahren durchführt;
- Fig. 2: ein Blockschaltbild eines Fernsprechendgeräts mit Einrichtungen zur Anzeige von Rufnummern;
- Fig. 3: ein Flußdiagramm einer ersten Ausführungsform des mit der Fernmeldenebenstellenanlage nach Fig. 1 durchführbaren Verfahrens gemäß der Erfindung und
- Fig. 4: ein Flußdiagramm einer zweiten Ausführungsform des erfindungsgemäßen Verfahrens.

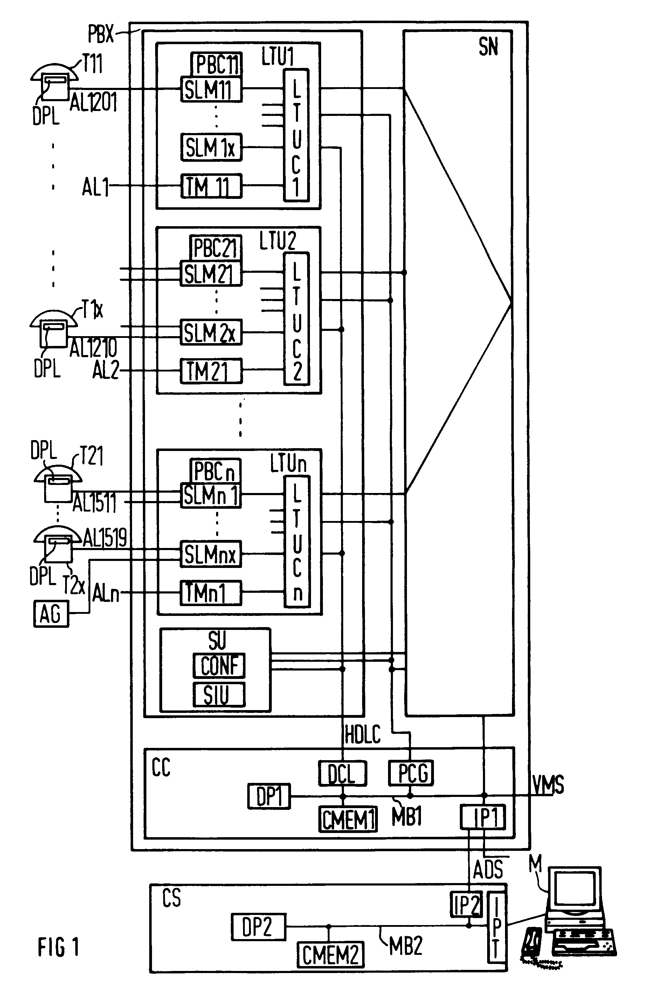

Die in Figur 1 dargestellte Fernsprechnebenstellenanlage kann wie die in den eingangs beschriebenen Produktschriften offenbarte Nebenstellenanlage bzw. wie das Fernmeldevermittlungssystem strukturiert sein, das in den veröffentlichten europäischen Patentanmeldungen EP 0 306 693 A1 (US-PS 4,903,258), EP 0 303 870 A2 (US-PS 5,018,097) und EP 0 303 869 A1 (US-PS 5,047,923) offenbart ist. Der Software-Architektur des bekannten Systems liegen die folgenden Kriterien zugrunde: Das erste Architektur-Kriterium betrifft die Dreiteilung der Vermittlungs-Software in die Funktionskomplexe Peripherietechnik PP (peripheral processing), Leitungstechnik DH (device handler) und Vermittlungstechnik CP (call processing). Dabei nimmt die Peripherietechnik PP die Transportfunktion wahr und läuft im wesentlichen auf den Anschlußbaugruppen für die Endgeräte und Leitungen. Die Leitungstechnik DH hat die Aufgabe, die Schnittstelle zu Peripherietechnik PP an die ISDN-Schnittstellen zur Vermittlungstechnik CP anzupassen. Die Vermittlungstechnik CP erbringt die eigentlichen Leistungen für die Benutzeroberflächen der Endgeräte bzw. für die Schnittstellen zu den verschiedenen Sätzen.

Das zweite Architektur-Kriterium stellt die an Dienste und Endgeräten orientierte Zustands- bzw. Anreizverarbeitung in der Vermittlungstechnik CP dar. Das Dienstekriterium wird als ISDN-Protokollelement der Steuerungs-Software angeboten, die dienstspezifisch aufgrund der mitgelieferten Geräteadresse den Geratetyp ermittelt.

Das dritte Architektur-Kriterium zur einfachen Behandlung der Endgeräte- und Dienstevielfalt besteht in der strikten Anwendung der eigenständigen Datenbasis, auf welche die Programme prinzipiell nur auf logischer Ebene zugreifen.

Die in der Figur 1 dargestellte Anlage besteht aus einer Systemzentrale PBX mit einem Steuerwerk CC, das mit sogenannten Peripheriemodulen und einem Koppelnetz SN verbindbar ist. Die Peripheriemodule umfassen insbesondere Teilnehmeranschlußschaltungen SLM11...SLM1X, SLM21...SLM2X, SLMn1...SLMnX sowie sogenannte Leitungssatzschaltungen TM11, TM21 und TMn1.

Die Teilnehmeranschlußschaltungen SLM sind teilnehmerorientierte Geräteanschlüsse, wie beispielsweise ISDN-Basisanschlüsse für digitale mono- und multifunktionale Endgeräte, 1-Kanal-Anschlußmodule für Endgeräte, wie digitale Sprachendgeräte und Vermittlungsendgeräte sowie Teilnehmeranschlüsse für analoge Sprachendgeräte. Die in Figur 1 dargestellten Endgeräte T11, T1X, T21und T2x sind vorzugsweise digitale Sprachendgeräte, denen die Anschlußlagen (physikalische Adressen) Al1201, Al1210,Al1511 und Al1519 zugeordnet sind. Die Endgeräte T11,T1x und T21 weisen jeweils eine optische Anzeigeeinrichtung DPL auf, während das Endgerät T2x keine optische Anzeigeeinrichtung aufweist. Ein Ansagegerät AG an der Teilnehmeranschlußschaltung SLMnx dient gegebenenfalls der akustischen Bedienerführung bei der erfindungsgemäßen Anzeige von Rufnummern, zum Beispiel am Endgerät T2x.

Die Leitungssatzschaltungen TM11, TM21, TMn1 dienen zur Verbindung mit öffentlichen und/oder privaten Netzen bzw. Sondereinrichtungen und sind beispielsweise ISDN-Basisanschlüsse für ISDN-Amtsverkehr (Amtsleitungen AL1, AL2, ALn) und ISDN-Querverkehr (2 Kanäle zu 64 kBit/s und ISDN-Signalisierung) sowie digitale Schnittstelleneinheiten (digital interface unit), d. h. Multiplexanschlüsse (30 Kanäle zu je 64 kBit/s) mit den Betriebsarten Amts- und Querverkehr mit ISDN-Signalisierung, Querverkehr mit kanalassoziierter Signalisierung.

Alle Peripheriemodule SLM11..., TM11... haben die gleichen systeminternen Schnittstellen. Sie koppeln die einzelnen Basiskanäle B, auf denen Nutzdaten, d. h. Sprach- und/oder Dateninformationen übertragen werden, an eine beliebige Auswahl aus zwei Multiplexkanälen (highways) mit beispielsweise 32 Kanälen des Koppelnetzes SN und übergeben die in einem Steuerkanal D übertragenen Signalisierungsinformationen als HDLC-Protokoll an die Steuerung CC.

Jedes Peripheriemodul weist eine Steuerung PBC11... auf, deren Aufgabe es ist, belegte Anschlußkanäle zu ausgewählten Kanälen der Multiplexkanäle gegebenenfalls mit einer Steuerung LTUC1... einer zugehörigen Anschlußeinheit LTU1... zuzuordnen (europäische Patente 0 113 884 und 0 264 890, US-Patent 4,694,452).

Mehrere Peripheriemodule können funktionell zu einer Anschlußeinheit LTU zusammengefaßt werden. Jeder Anschlußeinheit LTU1 ...LTUn ist eine Steuerung LTUC1...LTUCn zugeordnet und mit dem Koppelnetz SN über beispielsweise vier Sprach-Daten-Multiplexkanäle miteinander verbunden. Der Meldungsaustausch zwischen den Peripheriemodulen und der Steuerung CC erfolgt über einen Signalisierungskanal, der in Figur 1 mit dem Bezugszeichen HDLC bezeichnet ist, im bekannten HDLC-Punkt-zu-Mehrpunkt-Verfahren.

Mehreren Anschlußeinheiten LTU1...LTUn kann eine sogenannte Serviceeinheit SU zugeordnet sein. Diese umfaßt eine Signalisierungseinheit SIU und gegebenenfalls eine Konferenzeinrichtung CONF. Die Signalisierungseinheit SIU übernimmt die Zeichenversorgung des Systems mit Hörtönen und gegebenenfalls mit Ansagen, sowie den Empfang von MFV-Taktwahlzeichen und Amtswähltönen. Diese Funktion wird in an sich bekannter Weise mit Signalprozessoren realisiert.

Die Signalisierungseinheit SIU ist über zwei Sprach-Daten-Multiplexkanäle bei fester Funktionszuordnung mit dem Koppelnetz SN verbunden.

Das Koppelnetz SN ist vorzugsweise modular aufgebaut und besteht beispielsweise aus einer blockierungsfreien Zeitstufe für 16-Sprach-Daten-Multiplexkanäle. Durch Zusammenschalten zweier derartiger Grundmodule entsteht eine Koppelstufe für 1024 Zeitlagen (32 Multiplexkanäle zu je 32 Kanälen). Die in dieser Weise gebildete blockierungsfreie Zeitstufe verbindet von den je 32 ankommenden und abgehenden Multiplexkanälen für Sprache oder Daten jeweils zwei beliebige der 32 Zeitlagen miteinander. Neben 1-Kanal-Verbindungen können auch Breitbandverbindungen hergestellt werden.

Das Steuerwerk CC übernimmt im Zusammenwirken mit den Steuerungen PCB11...,LTUC1... die entsprechend dem Peripherieaufbau anfallende vermittlungstechnische Verarbeitung. Es besteht aus einem Datenprozessor DP, einem Prozessor für Signalisierungssteuerung DCL, einem Taktgenerator PCG, einem Speicher CMEM und einem Schnittstellenprozessor IP1, der mit einer in Figur 1 nicht dargestellten betriebstechnischen Einheit ADS verbunden ist. Der Speicher CMEM1 enthält eine Datenbasis mit Konfigurationsdaten, zu denen die Zuordnung der Anschlußlagen zu den Rufnummern der Endgeräte T11...T1x, T21...T2x und die zugehörigen Teilnehmernamen gehört, sowie das der Steuerung CC zugeordnete Programm. Die genannten Komponenten sind über einen Multibus MB, wie in der Figur 1 dargestellt, miteinander verbunden.

An den Schnittstellenprozessor IP1 ist auch ein adaptiver Server mit einer zweiten Steuerung CS (Control Server) angekoppelt. Die Steuerung CS umfaßt einen Datenprozessor DP2, einen Speicher CMEM2 und Schnittstellenprozessoren IP2 und IPT. Die genannten Komponenten sind, wie in Figur 1 dargestellt, miteinander verbunden. Im Speicher CMEM2 ist das der Steuerung CS zugeordnete Programm abgelegt. Das mit dem Schnittstellenprozessor IPT verbundene Datenendgerät M ist als Vermittlungsstelle ausgebildet, wobei in das Datenendgerät M auch betriebstechnische Aufträge eingebbar sind.

Für den Datenprozessor DP werden vorzugsweise Prozessoren der Reihe SAB 8086/80286 (Fa. Siemens) verwendet. Der Speicher CMEM enthält hochintegrierte dynamische RAM-Bausteine und Fehlerkorrekturschaltungen.

Der Prozessor DCL für Signalisierungssteuerung dient dem Abwickeln des HDLC-Protokolls zu den Anschlußeinheiten LTU1... LTUn und der Serviceeinheit SU.

Der Taktgenerator PCG führt die Taktversorgung der Fernmeldenebenstellenanlage durch.

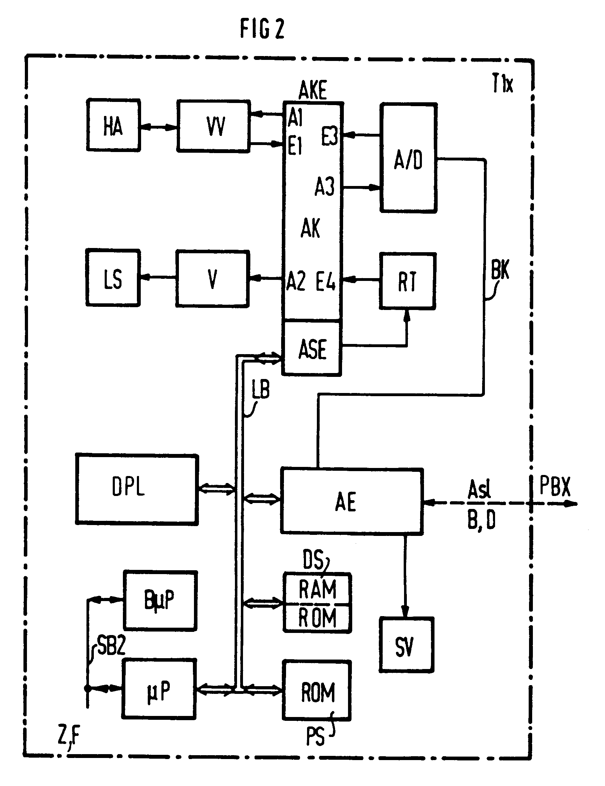

Fig. 2 zeigt ein Blockschaltbild des zu prüfenden Fernsprechendgerätes T1x, an dem die eigene Rufnummer und der zugehörige Teilnehmername angezeigt werden. Die zentrale Einrichtung zur Steuerung der Teilnehmer-Bedienerprozeduren, zur Steuerung aller im Endgerät zu übermittelnder akustischer Signale und zur Steuerung der Signalisierung mit der Vermittlungsanlage ist durch ein Mikroprozessorsystem µP realisiert. Beispielsweise kann dieses Mikroprozessorsystem µP durch einen Siemens Mikroprozessor SAB 80 C 31 gebildet sein. Über einen aus Steuer-, Adreß- und Datenleitungen gebildeten lokalen Bus LB ist das Mikroprozessorsystem µP mit einem Programmspeicher PS und einem Datenspeicher DS verbunden. Der in ROM-Speichertechnik realisierte Programmspeicher PS ist beispielsweise für ein maximal 64 kByte umfassendes Programm ausgelegt. Der ebenfalls beispielsweise 64 kByte umfassende Datenspeicher DS kann beispielsweise zur Hälfte einen in ROM-Speichertechnik ausgeführten Festspeicher - für Festdaten, Parameterdaten und Tabellen - und zur anderen Hälfte einen in RAM-Speichertechnik ausgeführten Speicher zur Speicherung benutzerindividueller Daten enthalten. Das Mikroprozessorsystem µP weist zusätzlich eine in Fig. 2 nicht dargestellte serielle Busschnittstelle auf. Diese serielle Busschnittstelle ist über einen seriellen Bus SB2 mit einem Bedienfeld-Mikroprozessorsystem BµP verbunden. Der serielle Bus SB2 ist außerdem mit den Zifferntasten Z und Funktionstasten F verbunden. Zu den Funktionstasten F gehört beispielsweise eine Taste "*", mit der im Rahmen des erfindungsgemäßen Verfahrens in das zu prüfende Endgerät T1x eingebbare Befehle gebildet werden. Dies sind die Befehle "*123" und "*456", mit denen die Aktivierung bzw. die Deaktivierung der Anzeige von Rufnummer und Teilnehmername am Endgerät T1x (DPL,HA/LS) ausgelöst werden.

In dem Bedienfeld-Mikroprozessorsystem BµP werden die von den Bedienelementen Z, F erzeugten codierten Informationen erkannt, über den seriellen Bus SB2 zum Mikroprozessorsystem µP seriell übertragen und dort zu Signalisierungsinformationen und zu lokalen Bedienerführungsinformationen weiterverarbeitet, die vorzugsweise als optische Anzeigen auf der Anzeigeeinrichtung DPL dargestellt werden. Zusätzlich oder alternativ zu der optischen Anzeige werden Rufnummer und Teilnehmername akustisch dargestellt.

Die an einen lokalen Bus LB angeschlossene Anzeigeeinrichtung DPL ist beispielsweise durch ein LCD-Display (zwei Zeilen à 24 Zeichen) realisiert.

Das Fernsprechendgerät T1x ist über eine Anschalteeinrichtung AE mit der Teilnehmeranschlußleitung Asl verbunden. Über diese Teilnehmeranschlußleitung Asl kommuniziert das Fernspechendgerät mit der zugehörigen Vermittlungsanlage PBX, die eine zentrale Steuerung (CC in Fig. 1) für die Durchführung der eigentlichen Vermittlungsvorgänge und die ihr zugeordnete Steuerung CS aufweist, die der Realisierung der Prozeduren im Zusammenhang mit der Anzeige von Rufnummer und Teilnehmername im Rahmen des erfindungsgemäßen Verfahrens dienen kann.

Über die Teilnehmeranschlußleitung Asl werden beispielsweise 64 kBit/s umfassende Nutzinformationen in einem Nutzinformationskanal B und 16 kBit/s umfassende Signalisierungsinformationen in einem Signalisierungsinformationskanal D bidirektional übermittelt. Die im Signalisierungsinformationskanal D übermittelten Signalisierungsinformationen sind entsprechend dem OSI-Referenzmodell strukturiert. Von den sieben abstrahierten Protokollschichten des OSI-Referenzmodells sind die unteren drei Protokollschichten realisiert. Die für Kommunikationsendgeräte-Kommunikationsanlagen-Signalisierung eingesetzten Protokollschichten sind als Bitübertragungsschicht (Schicht 1), als Sicherungsschicht (Schicht 2) und als Vermittlungsschicht (Schicht 3) definiert. Die Bitübertragungsschicht, auch als physikalische Ebene bezeichnet, besorgt das Übermitteln der Informationen in den Nutzinformations- und Signalisierungskanälen B, D gleichzeitig in beiden Richtungen. Hierbei ist das Aktivieren, Deaktivieren und Betreiben des Fernsprechendgerätes eingeschlossen. Die Sicherungsschicht übernimmt für die anschließende Vermittlungsschicht das gesicherte Übermitteln der Signalisierungsinformationen zwischen der Vermittlungsanlage und dem Endgerät. Dies kann beispielsweise durch eine HDLC-Übermittlungsprozedur oder durch eine Last-Look-Prozedur erfolgen. Unter Last-Look-Prozedur ist ein mehrmaligen Übermitteln der Informationen zu verstehen, die in der Empfangseinrichtung mindestens Zweimal hintereinander als gleich erkannt und außerdem verschieden von den zuletzt empfangenen gültigen Signalisierungsinformation sein muß, um als gültig erkannt zu werden. Die Vermittlungsschicht dient dem Aufbau, Überwachen und Abbau der Kommunikationsverbindungen sowie zur Steuerung und Kontrolle der durch die Vermittlungsanlage PBX unterstützten Leistungsmerkmale. In der Anschlußeinrichtung werden im wesentlichen die Funktionen der Bitübertragungsschicht (Schicht 1) unter Steuerung des Mikroprozessorsystems µP realisiert. In der Anschalteeinrichtung AE sind folgende wesentliche Funktionen enthalten:
- Übertragungstechnische Anpassung an die Teilnehmeranschlußleitung Asl
- Übermitteln der Signalisierungs- und Nutzinformationen durch nach einem Zeitgetrenntlage-Übertragungsverfahren gebildeten Signalen
- Trennen von Nutz- und Signalisierungsinformationen und Weiterleiten an die entsprechenden Einrichtungen und
- Auskoppeln einer über die Anschlußleitung Asl übertragenen und von der Vermittlungsanlgen VA bereitgestellten elektrische Energie und deren Weiterführung an eine fernsprechendgeräteinterne Stromversorgung SV.

In der Stromversorgung SV wird die von der Anschlußeinrichtung AE übermittelte elektrische Energie in eine für den Betrieb des Fernsprechendgeräts erforderliche positive und negative Speisespannung umgesetzt. Vorzugsweise ist diese Stromversorgung SV durch eine platzsparende Schaltregler-Stromversorgung realisiert.

Die in der Anschlußeinrichtung AE von über die Anschlußleitung Asl übermittelten Informationen abgetrennten Signalisierungsinformationen werden lokalbusgemäß aufbereitet und über den lokalen Bus LB an das Mikroprozessorsystem µP übermittelt. Im Mikroprozessorsystem µP werden diese Signalisierungsinformationen gemäß den der Sicherungsschicht und Vermittlungsschicht zugeordneten Funktionen weiterverarbeitet und die entsprechenden Reaktionen - z. B. Ansteuern von Ausgabeeinheiten -eingeleitet.

Die in der Anschlußeinrichtung AE abgetrennten Nutzinformationen gelangen über einen Bus BK an eine Analog/Digital-Umsetzeinrichtung A/D. In dieser werden aus den von der Anschlußeinrichtung AE abgegebenen digitalisierten Nutzinformationssignalen, die Sprachsignale darstellen, analoge Sprachsignale gebildet. Die an einem weiteren Eingang der Analog/Digital-Umsetzeinrichtung A/D ankommenden analogen Sprachsignale werden in digitale Sprachsignale umgesetzt. Die Codierung bzw. Decodierung der analogen bzw. digitalen Sprachsignale erfolgt durch das bekannte, standardisierte PCM-Verfahren. Die analogen Sprachsignale gelangen über eine entsprechende Verbindung zu einem dritten Eingang E3 einer Akustikeinrichtung AKE. Die Akustikeinrichtung AKE setzt sich aus einem Akustikkoppler AK und einer Ansteuereinrichtung ASE zusammen.

Durch den Akustikkoppler AK werden die von der Analog/Digital- Umsetzeinrichtung A/D ankommenden analogen Signale entweder nur an einen ersten Ausgang A1 oder an den ersten und an einen zweiten Ausgang A1, A2 vermittelt. Ausgang A1 ist über einen Vorverstärker VV mit dem Handapparat HA des Fernsprechendgerätes verbunden. Die analogen Sprachsignale werden in jedem Fall nach Durchschalten der Verbindung über den Vorverstärker VV an eine im Handapparat HA angeordnete Hörmuschel geführt. Analog hierzu gelangen die von der im Handapparat HA angeordneten Sprechkapsel abgegebenen Sprachsignale über den Vorverstärker VV an einen ersten Eingang E1 des Akustikkopplers AK.

Die analogen Sprachsignale werden durch den Akustikkoppler AK an einen mit der Analog/Digital-Umsetzeinrichtung A/D verbundenen dritten Ausgang A3 vermittelt. Diese analogen Sprachsignale werden in der Analog/Digital-Umsetzeinrichtung A/D in digitale Signale umgesetzt und in der Anschlußeinrichtung AE in den zur Anschlußleitung Asl übermittelten Nutzinformationsstrom eingefügt. Ist im Fernsprechendgerät das Leistungsmerkmal "Lauthören" durch beispielsweise einen entsprechenden Tastenanreiz aktiviert, so werden die am dritten Eingang E3 ankommenden analogen Sprachsignale gleichzeitig zu einem zweiten Ausgang A2 des Akustikkopplers AK geführt. Von dort gelangen die analogen Sprachsignale über einen Verstärker V zu einem im Fernsprechendgerät angeordneten Lautsprecher LS, über den auch im Rahmen des erfindungsgemäßen Verfahrens die Rufnummer des Teilnehmerendgeräts T1x und der zugehörige Teilnehmername ausgebbar sind.

Die in der Akustikeinrichtung AKE angeordnete Ansteuereinrichtung ASE ist sowohl mit dem Akustikkoppler AK als auch mit dem lokalen Bus LB verbunden. In dieser Ansteuereinrichtung ASE werden die vom Mikroprozessorsystem µP über den lokalen Bus LB übermittelten Steuerbefehle in Informationen umgesetzt, durch die die Verbindungswege im Akustikkoppler AK eingestellt werden. Zusätzlich steuert die Ansteuereinrichtung ASE einen Ruftongenerator RT, der je nach Ansteuerung unterschiedliche Ruftöne mit entsprechenden Rufrythmen erzeugt. Diese Ruftöne werden über den Akustikkoppler AK unter Steuerung der Ansteuereinrichtung ASE an den Handapparat HA und/oder den Lautsprecher LS vermittelt.

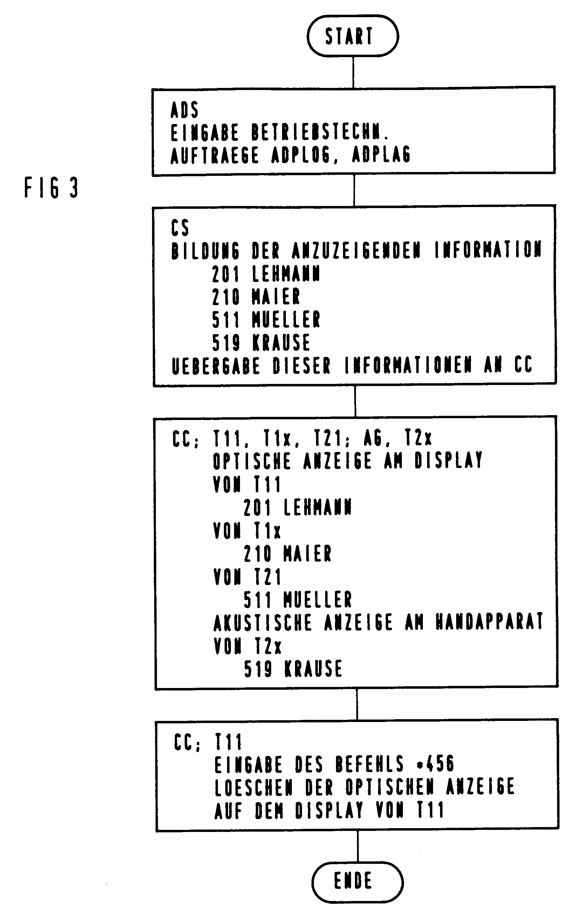

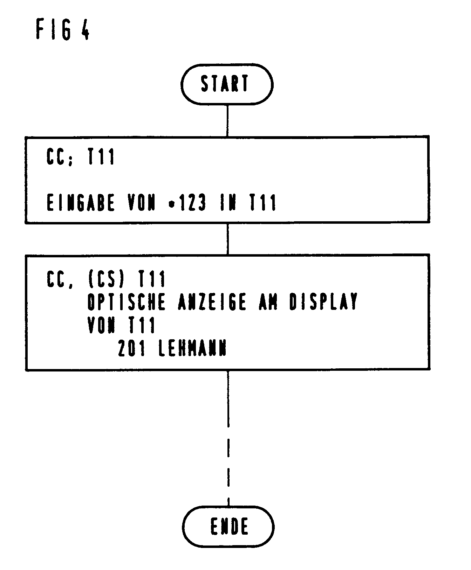

In den Figuren 3 und 4 sind zwei unterschiedliche Ausführungsformen des erfindungsgemäßen Verfahrens dargestellt.

Das erfindungsgemäße Verfahren erfolgt jeweils nach dem Einrichten der Fernmeldeendgeräte. Das Einrichten der Endgeräte erfolgt mittels eines betriebstechnischen Auftrags, bei dem unter anderem für jedes Endgerät die Anschlußlage, die Rufnummer und der Name des dem Endgerät zugeordneten Teilnehmers in die betriebstechnische Einheit ADS eingegeben werden. Ferner werden beim Einrichten der Endgeräte die endgerätindividuellen Berechtigungen bestimmt.

Bei der in Fig. 3 gestellten Ausführungsform des erfindungsgemäßen Verfahrens wird in die betriebstechnische einheit ADS oder je nach Ausgestaltung der Fernsprechnebenstellenanlage in das Datenendgerät M ein betriebstechnischer Auftrag eingegeben, der die Anzeige von Rufnummer- und Teilnehmername am jeweiligen Endgerät auslöst. Dabei kann durch den Befehl ADPLOG (allgemeine optische Anzeige aktivieren) die Anzeige für alle Endgeräte bestimmt werden, die über eine optische Anzeigevorrichtung verfügen. Dies sind bei dem in Fig. 1 dargestellten Beispiel die Endgeräte T11,T1x und T21. Ferner kann der Befehl ADPL AG (allgemeine akustische Anzeige aktivieren) für die Endgeräte eingegeben werden, die nicht über eine optische Anzeigeeinrichtung verfügen, an denen aber eine der optischen Anzeige gleichwertige Anzeige in akustischer Form erfolgen kann. Bei der in Fig. 1 dargestellten Fernmeldenebenstellenanlage gilt dies für das Fernsprechendgerät T2x, welches über keine optische Anzeigeeinrichtung verfügt. Der akustische Hinweis ist über den Handapparat HA bzw. den Lautsprecher LS (Fig. 2) abhörbar.

Ausgelöst durch die vorgenannten Befehle ADPLOG und ADPL AG bildet beispielsweise die Steuerung CS die anzuzeigenden Informationen und übergibt diese zusammen mit den zugehörigen Anschlußlageinformationen an die Steuerung CC. Die Steuerung CC übermittelt dann an die durch die Anschlußlageinformationen bezeichneten Endgeräte die endgerätindividuellen Rufnummern- und Teilnehmernameninformationen, die dann an den Endgeräten in optischer bzw. in akustischer Form dargestellt werden. Beispielsweise wird auf der optischen Anzeigeeinrichtung DPL des Endgeräts T11, dem die Anschlußlage Al1201 zugeordnet ist, folgender Hinweis dargestellt: "201 Lehmann". Ebenso wird an jedem Endgerät die jeweilige eigene Rufnummer und der zugehörige Teilnehmername angezeigt. Beim Endgerät T2x, das über kein Display verfügt, wird nach Abheben des Handapparats vom Ansagegerät AG (Fig. 1) der Text "519 Krause" zugesprochen. Zusätzlich zu Rufnummer und Name kann die Anschlußlage optisch bzw. akustisch angezeigt werden. Damit kann eine Prüfperson diese Daten in einfacher Weise mit einem entsprechenden Plan auf Korrektheit überprüfen und das betreffende Fernmeldegerät mit der korrekten Rufnummer beschriften. Beim Stand der Technik wäre es erforderlich gewesen, von einem der Endgeräte T11,T21 oder T2x die Rufnummer von T1x zu wählen und im Anschluß daran die Anzeige am Endgerät T1x zu überprüfen.

Das Löschen der Anzeige kann beispielsweise durch entsprechende betriebstechnische Aufträge DDPLOG (allgemeine optische Anzeige löschen), DDPLAG (allgemeine akustische Anzeige löschen), durch Ablauf einer vorgebbaren Zeit nach Beginn der Anzeige oder durch Einzelbefehle an den Endgeräten ausgelöst werden.

Die betriebstechnischen Aufträge zum Aktivieren und Löschen der Anzeigen kann auf einzelne Endgeräte eingeschränkt werden. Dies geschieht durch betriebstechnische Aufträge ADPLOx, ADPLAx, DDPLOx und DDPLAx, wobei in den Aufträgen endgeräteindividuelle Informationen anzugeben sind.

Beim erfindungsgemäßen Verfahren kann wie erwähnt und in Fig. 3 dargestellt vorgesehen sein, daß durch Eingabe eines Befehls an dem betreffenden zu prüfenden Endgerät z.B. T11 ein bestimmter Befehl (*456) in das Endgerät eingegeben wird. Dieser Befehl wird von den Steuerungen CC und CS bearbeitet und löst das Löschen der Anzeige an der optischen Anzeigeeinrichtung des zu prüfenden Endgeräts T11 aus. Zugleich kann dieser Befehl in der betriebstechnischen Einheit ADS bzw. im Datenendgerät M als Quittung für die korrekte Zuordnung von Anschlußlage, Rufnummer und Teilnehmername ausgewertet werden.

Bei der in Fig. 4 dargestellten Ausführungsform des erfindungsgemäßen Verfahrens wird die optische Anzeige von Rufnummer und Name nicht durch einen betriebstechnischen Auftrag sondern durch Eingabe eines Sonderzeichens, z.B. "*" und eines ersten Codes, z.B. "123", in das zu prüfende Endgerät z.B. T11, ausgelöst. Die Steuerung CS bildet die anzuzeigende Information und übergibt diese an die Steuerung CC, die diese Information am Display des Endgeräts T11 zur Anzeige bringt.

Nachdem die Prüfperson die korrekte Anzeige von Rufnummer und Teilnehmername überprüft hat und damit das Endgerät T11 korrekt beschriften kann, gibt die Prüfperson ein Sonderzeichen, z.B. "*", und einen zweiten Code, z.B. "456" in das Endgerät T11 ein. Die Steuerungen CC und CS bearbeiten diesen Befehl "*456" wie unten in Figur 3 angegeben und bewirken das Löschen der Anzeige am Display des Endgeräts T11. Diese Ausführungsform zeichnet sich dadurch aus, daß die Prüfung eines Endgeräts unabhängig vom Betriebszustand der anderen Endgeräte erfolgt.

## Patentansprüche

1. Verfahren zur Anzeige von Rufnummern an Fernmeldeendgeräten einer Fernmeldenebenstellenanlage (PBX) mit einer Steuerung (CC,CS), der ein in der Weise ausgestaltetes Programm zugeordnet ist, daß bei der Wahl einer fremden internen Rufnummer an dem Endgerät (T1x), an dem diese Rufnummer gewählt wird, die fremde interne Rufnummer und der Name eines der fremden internen Rufnummern zugeordneten Teilnehmers angezeigt werden, während bei der Wahl der eigenen Rufnummer an dem Endgerät, an dem diese Rufnummer gewählt wird, die eigene Rufnummer und eine auf die Unmöglichkeit einer Verbindungsherstellung bezeichnende Information angezeigt werden,
**dadurch gekennzeichnet,**
daß das der Steuerung (CC,CS) zugeordnete Programm in der Weise ausgestaltet ist, daß an dem durch seine Rufnummer bestimmten Endgerät (T1x) der Name des diesem Endgerät (T1x) zugeordneten Teilnehmers anzeigbar ist.

2. Verfahren nach Anspruch 1,
**dadurch gekennzeichnet,**
daß die Anzeige des Namens des diesem Endgerät (T1x) zugeordneten Teilnehmers durch die Wahl eines Sonderzeichens an diesem Endgerät (T1x) ausgelöst wird.

3. Verfahren nach Anspruch 1,
**dadurch gekennzeichnet,**
daß die Anzeige des Namens des diesem Endgerät (T1x) zugeordneten Teilnehmers durch einen betriebstechnischen Auftrag ausgelöst wird.

4. Verfahren nach Anspruch 3,
**dadurch gekennzeichnet,**
daß durch den betriebstechnischen Auftrag an mehreren Endgeräten (T1x,T11,T2y,T21) jeweils der Name des dem jeweiligen Endgerät (T1x,T11,T2y,T21) zugeordneten Teilnehmers angezeigt wird.

5. Verfahren nach einem der vorstehenden Ansprüche,
**dadurch gekennzeichnet,**
daß die Rufnummer und der Teilnehmername in optischer Form auf einer Anzeigeeinrichtung (DP2) am zugehörigen Fernmeldeendgerät (T1x) angezeigt werden.

6. Verfahren nach einem der Ansprüche 1 - 4,
**dadurch gekennzeichnet,**
daß die Rufnummer und der Teilnehmername in akustischer Form am zugehörigen Fernmeldeendgerät (T1x;HA,LS) angezeigt werden.

7. Anordnung zur Durchführung nach einem der vorstehenden Ansprüche, bestehend aus einem Fernsprechvermittlungssystem mit internen Endgeräten, die eine optische Anzeigeeinrichtung aufweisen,
**dadurch gekennzeichnet,**
daß einer Steuerung (CC,CS) des Fernsprechvermittlungssystems (PBX) ein Programm zugeordnet ist, das das Verfahren definiert.
